(19) Europäisches Patentamt / European Patent Office / Office européen des brevets

(11) **EP 4 742 563 A1**

(12) **EUROPEAN PATENT APPLICATION**
published in accordance with Art. 153(4) EPC

(43) Date of publication:
**13.05.2026 Bulletin 2026/20**

(21) Application number: **23946988.5**

(22) Date of filing: **29.07.2023**

(51) International Patent Classification (IPC):
**H04B 15/00** (2006.01)    **H04W 24/02** (2009.01)

(52) Cooperative Patent Classification (CPC):
**H04B 15/00; H04W 24/02**

(86) International application number:
**PCT/CN2023/110069**

(87) International publication number:
**WO 2025/025032 (06.02.2025 Gazette 2025/06)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Huawei Technologies Co., Ltd.
Shenzhen, Guangdong 518129 (CN)**

(72) Inventors:
• **JIANG, Chenglong
Shenzhen, Guangdong 518129 (CN)**

• **BI, Xiaoyan
Shenzhen, Guangdong 518129 (CN)**
• **LIU, Yong
Shenzhen, Guangdong 518129 (CN)**
• **XI, Xiaojun
Shenzhen, Guangdong 518129 (CN)**

(74) Representative: **MERH-IP Matias Erny Reichl
Hoffmann
Patentanwälte PartG mbB
Paul-Heyse-Straße 29
80336 München (DE)**

(54) **COMMUNICATION METHOD AND COMMUNICATION APPARATUS**

(57)    Embodiments of this application provide a communication method and a communication apparatus. The method includes: receiving a first signal, where the first signal includes a second signal and a third signal that causes interference to the second signal; and learning of, based on received indication information, a resource occupied by the third signal, so that the interference caused by the third signal can be accurately determined based on the resource occupied by the third signal. This helps accurately cancel the third signal from the first signal to obtain the second signal, to implement correct signal receiving and improve signal transmission quality.

FIG. 9

## Description

TECHNICAL FIELD

This application relates to the field of communication technologies, and in particular, to a communication method and a communication apparatus.

BACKGROUND

Over the past decades, a wireless communication system has undergone evolution and research from first generation analog communication to a 5th generation (5th generation, 5G) communication technology and a current 6th generation (6th generation, 6G) communication technology.

When a signal is sent between devices, the device may be interfered by another signal. How to enable a receiving device to accurately cancel interference, to implement correct signal receiving and improve signal transmission quality needs to be resolved.

SUMMARY

Embodiments of this application provide a communication method and a communication apparatus, to improve signal transmission quality.

According to a first aspect, an embodiment of this application provides a communication method. The method may be performed by a first apparatus, and the first apparatus is a terminal device or a module (for example, a chip) used in the terminal device. The method includes: receiving a first signal, where the first signal includes a second signal and a third signal, and the third signal is a signal that causes interference to the second signal; receiving indication information, where the indication information indicates a resource occupied by the third signal; and determining the second signal from the first signal based on the indication information.

In the foregoing solution, the first apparatus receives the first signal, where the first signal includes the second signal and the third signal that causes the interference to the second signal, and learns of, based on the received indication information, the resource occupied by the third signal, so that the interference caused by the third signal can be accurately determined based on the resource occupied by the third signal. This helps accurately cancel the third signal from the first signal to obtain the second signal, to implement correct signal receiving and improve signal transmission quality.

In a possible implementation method, the determining the second signal from the first signal based on the indication information includes: determining, based on the indication information, an interference estimation value on the resource occupied by the third signal; and determining the second signal from the first signal based on the interference estimation value.

In the foregoing solution, the interference estimation value on the resource occupied by the third signal is first determined based on the resource that is occupied by the third signal and that is indicated by the indication information, and then the second signal is determined from the first signal based on the interference estimation value. This helps accurately determine the second signal.

According to a second aspect, an embodiment of this application provides a communication method. The method may be performed by a second apparatus, and the second apparatus is a network device or a module (for example, a chip) used in the network device. The method includes: sending a second signal to a terminal device; and sending indication information to the terminal device, where the indication information indicates a resource occupied by a third signal that causes interference to the second signal.

In the foregoing solution, the second apparatus sends, to a first apparatus, the second signal and the indicated resource occupied by the third signal that causes the interference to the second signal. The first apparatus may learn of, based on the received indication information, the resource occupied by the third signal, so that the interference caused by the third signal can be accurately determined based on the resource occupied by the third signal. This helps accurately cancel the third signal to obtain the second signal, to implement correct signal receiving and improve signal transmission quality.

In a possible implementation method, the method further includes: sending the third signal to the terminal device.

According to a third aspect, an embodiment of this application provides a communication method. The method includes: A second apparatus sends a second signal to a first apparatus. A third apparatus sends a third signal to the first apparatus, where the third signal causes interference to the second signal. A fourth apparatus sends indication information to the first apparatus, where the indication information indicates a resource occupied by the third signal.

In the foregoing solution, the first apparatus may learn of, based on the received indication information, the resource occupied by the third signal, so that the interference caused by the third signal can be accurately determined based on the resource occupied by the third signal. This helps accurately cancel the third signal to obtain the second signal, to implement correct signal receiving and improve signal transmission quality.

In a possible implementation method, the fourth apparatus is the same as the second apparatus, and the third apparatus is different from the second apparatus.

In a possible implementation method, the fourth apparatus is the same as the third apparatus, and the fourth apparatus is different from the second apparatus.

In a possible implementation method, the fourth apparatus, the second apparatus, and the third apparatus are the same.

In a possible implementation method, the fourth apparatus, the second apparatus, and the third apparatus are different from each other.

Based on any one of the implementation methods of the first aspect to the third aspect:

In a possible implementation method, the indication information indicates a start location and a size of the resource occupied by the third signal.

In a possible implementation method, the indication information includes a precoding resource block group (precoding resource block group, PRG) start location, a PRG size, and a quantity of PRGs, the PRG start location indicates the start location of the resource occupied by the third signal, and the PRG size and the quantity of PRGs indicate the size of the resource occupied by the third signal.

In a possible implementation method, the indication information includes at least two sets of PRG information, and each set of PRG information includes a PRG start location, a PRG size, and a quantity of PRGs. The PRG start location indicates a start location of a part of the resource occupied by the third signal, and the PRG size and the quantity of PRGs indicate a size of the part of the resource.

In a possible implementation method, the indication information includes a reference point, an offset value, and a resource size, the reference point and the offset value indicate the start location of the resource occupied by the third signal, and the resource size indicates the size of the resource occupied by the third signal.

In a possible implementation method, the indication information is a bitmap, and first information in the bitmap indicates at least one resource element in the resource occupied by the third signal.

In the foregoing solution, the resource occupied by the third signal is accurately indicated by using the indication information. This helps the first apparatus accurately cancel the third signal to obtain the second signal, to implement correct signal receiving and improve signal transmission quality.

In a possible implementation method, the resource occupied by the third signal and a resource occupied by the second signal totally or partially overlap.

In a possible implementation method, the indication information further indicates at least one of the following information:

a port number of the third signal, where the port number indicates a source of the third signal;
a sequence of the third signal; and
scrambling code information of the third signal.

According to a fourth aspect, an embodiment of this application provides a communication apparatus. The apparatus has a function of implementing any one of the implementation methods of the first aspect. The function may be implemented by hardware, or may be implemented by hardware by executing corresponding software. The hardware or the software includes one or more modules corresponding to the function.

According to a fifth aspect, an embodiment of this application provides a communication apparatus. The apparatus has a function of implementing any one of the implementation methods of the second aspect. The function may be implemented by hardware, or may be implemented by hardware by executing corresponding software. The hardware or the software includes one or more modules corresponding to the function.

According to a sixth aspect, an embodiment of this application provides a communication apparatus, including a unit or a means (means) configured to perform steps of any one of the implementation methods of the first aspect and the second aspect.

According to a seventh aspect, an embodiment of this application provides a communication apparatus, including a processor and an interface circuit. The processor is configured to: communicate with another apparatus through the interface circuit, and perform any one of the implementation methods of the first aspect and the second aspect. There are one or more processors.

According to an eighth aspect, an embodiment of this application provides a communication apparatus, including a processor coupled to a memory. The processor is configured to invoke a program stored in the memory, to perform any one of the implementation methods of the first aspect and the second aspect. The memory may be located inside or outside the apparatus. In addition, there may be one or more processors.

According to a ninth aspect, an embodiment of this application provides a communication apparatus, including a processor and a memory. The memory is configured to store computer instructions. When the apparatus runs, the processor executes the computer instructions stored in the memory, to enable the apparatus to perform any one of the implementation methods of the first aspect and the second aspect.

According to a tenth aspect, an embodiment of this application further provides a computer program product. The computer program product includes a computer program or instructions. When the computer program or the instructions are run by a communication apparatus, any one of the implementation methods of the first aspect and the second aspect is performed.

According to an eleventh aspect, an embodiment of this application further provides a computer-readable storage medium. The computer-readable storage medium stores instructions. When the instructions are run on a communication apparatus, any one of the implementation methods of the first aspect and the second aspect is performed.

According to a twelfth aspect, an embodiment of this application further provides a chip system, including a processor, configured to perform any one of the implementation methods of the first aspect and the second aspect.

According to a thirteenth aspect, an embodiment of this application further provides a communication system. The communication system includes a second apparatus, a third apparatus, and a fourth apparatus, and the communication system is configured to perform any one of the implementation methods of the third aspect.

BRIEF DESCRIPTION OF DRAWINGS

FIG. 1(a) is a diagram of an architecture of a communication system to which an embodiment of this application is applied;
FIG. 1(b) is a diagram of a network device;
FIG. 2 is a diagram of spatial multiplexing of a sensing signal and a data signal in an ISAC scenario;
FIG. 3 is an example diagram of classification performed based on scenarios in an ISAC scenario;
FIG. 4 is an example diagram of classification performed based on time-frequency resource overlap in an ISAC scenario;
FIG. 5 is an example diagram of classification performed based on waveforms in an ISAC scenario;
FIG. 6 is an example diagram of mismatch between PRGs of different data signals in a reflection scenario;
FIG. 7 is an example diagram of classification performed based on scenarios in a reflection scenario;
FIG. 8 is a diagram of three interference channels that are independent of each other and have different distributions;
FIG. 9 is a schematic flowchart of a communication method according to an embodiment of this application;
FIG. 10(a) is an example diagram of indicating a resource occupied by an interference signal according to an embodiment of this application;
FIG. 10(b) is an example diagram of indicating a resource occupied by an interference signal according to an embodiment of this application;
FIG. 10(c) is an example diagram of indicating a resource occupied by an interference signal according to an embodiment of this application;
FIG. 11 is an example diagram of resource mapping between a sensing signal and a data signal;
FIG. 12 is another example diagram of resource mapping between a sensing signal and a data signal;
FIG. 13 is another example diagram of resource mapping between a sensing signal and a data signal;
FIG. 14 is a diagram of a structure of a communication apparatus according to an embodiment of this application; and
FIG. 15 is a diagram of a structure of a communication apparatus according to an embodiment of this application.

DESCRIPTION OF EMBODIMENTS

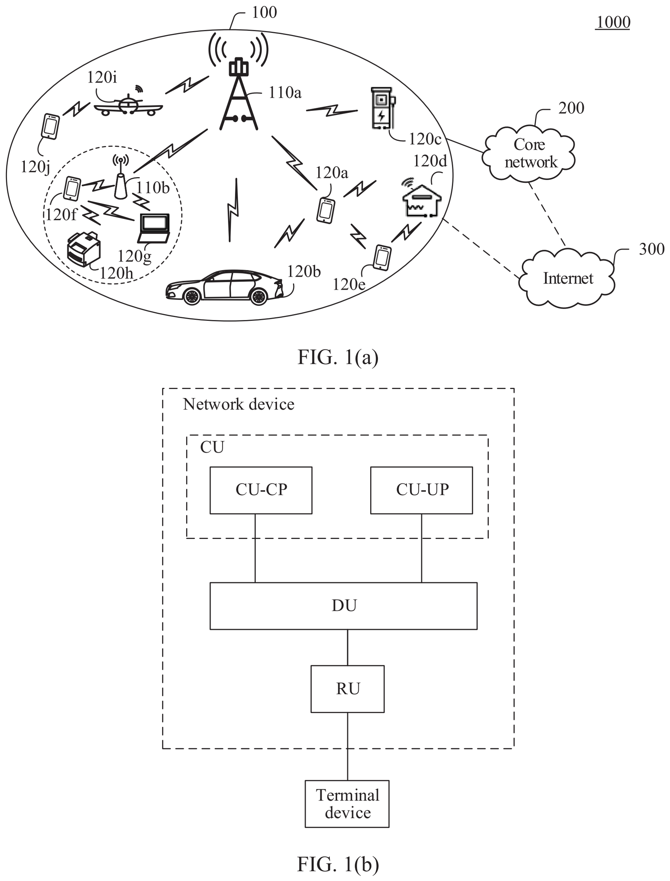

FIG. 1(a) is a diagram of an architecture of a communication system to which an embodiment of this application is applied. The communication system 1000 shown in FIG. 1(a) includes a radio access network 100 and a core network 200. Optionally, the communication system 1000 further includes an internet 300. The radio access network 100 may include at least one network device (for example, 110a and 110b in FIG. 1(a)), and may further include at least one terminal device (for example, 120a to 120j in FIG. 1(a)). The terminal device is connected to the network device in a wireless manner, and the network device is connected to the core network in a wireless or wired manner. A core network device and the network device may be different physical devices that are independent of each other; functions of the core network device and logical functions of the network device may be integrated into a same physical device; or a part of functions of the core network device and a part of functions of the network device may be integrated into one physical device. Terminal devices may be connected to each other in a wired or wireless manner, and network devices may be connected to each other in a wired or wireless manner. FIG. 1(a) is only a diagram. The communication system may further include another network device, for example, a wireless relay device and a wireless backhaul device, which are not shown in FIG. 1(a).

The network device is an access device for the terminal device to access the communication system in a wired or wireless manner. The network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, a base station in a future mobile communication system, an access node in a wireless fidelity (wireless fidelity, Wi-Fi) system, or the like. The network device may alternatively be a module or a unit that completes a part of functions of a base station, for example, may be a central unit (central unit, CU), or may be a distributed unit (distributed unit, DU). The CU herein completes functions of a radio resource control protocol layer and a packet data convergence protocol (packet data convergence protocol, PDCP) layer of the base station, and may further complete a function of a service data adaptation protocol (service data adaptation protocol, SDAP) layer. The DU completes functions of a radio link control layer and a medium access control (medium access control, MAC) layer of the base station, and may further complete a part or all of functions of a physical layer. For detailed descriptions of the foregoing protocol layers, refer to technical specifications related to the 3rd generation partnership project (3rd generation partnership project, 3GPP). The network device may be a macro base station (for example, 110a in FIG. 1(a)), may be a micro base station or an indoor base station (for example, 110b in FIG. 1(a)), or may be a relay node, a donor node, or the like. A specific technology and a specific device form that are used by the network device are not limited in embodiments of this application.

The terminal device is a device that has a wireless transceiver function, and may send a signal to the network device, or receive a signal from the network device. The terminal device includes but is not limited to a terminal apparatus, a terminal, user equipment (user equipment, UE), a mobile station, a mobile terminal, and the like. The terminal device may be widely used in various scenarios, for example, device-to-device (device-to-device, D2D), vehicle-to-everything (vehicle-to-everything, V2X) communication, machine-type communication (machine-type communication, MTC), an internet of things (internet of things, IoT), virtual reality, augmented reality, industrial control, self-driving, telemedicine, a smart grid, smart furniture, a smart office, smart wearable, smart transportation, and a smart city. The terminal device may be specifically a mobile phone, a tablet computer, a computer with a wireless transceiver function, a wearable device, a vehicle, an airplane, a ship, a robot, a robot arm, a smart home device, or the like. A specific technology and a specific device form that are used by the terminal device are not limited in embodiments of this application.

The network device and the terminal device may be at fixed locations or may be movable. The network device and the terminal device may be deployed on land, including an indoor or outdoor device, a handheld device, or a vehicle-mounted device; or may be deployed on a water surface; or may be deployed on a plane, a balloon, or an artificial satellite. Application scenarios of the network device and the terminal device are not limited in embodiments of this application.

Roles of the network device and the terminal device may be relative. For example, a helicopter or an uncrewed aerial vehicle 120i in FIG. 1(a) may be configured as a mobile network device. For the terminal device 120j that accesses the radio access network 100 through 120i, the terminal device 120i is a network device. However, for the network device 110a, 120i is a terminal device, that is, 110a and 120i communicate with each other by using a radio air interface protocol. Certainly, 110a and 120i may alternatively communicate with each other by using an interface protocol between network devices. In this case, compared with 110a, 120i is also a network device. Therefore, both the network device and the terminal device may be collectively referred to as communication apparatuses. 110a and 110b in FIG. 1(a) may be referred to as communication apparatuses having a function of the network device, and 120a to 120j in FIG. 1(a) may be referred to as communication apparatuses having a function of the terminal device.

Communication between a network device and a terminal device, between network devices, or between terminal devices may be performed by using a licensed spectrum, an unlicensed spectrum, or both a licensed spectrum and an unlicensed spectrum; or may be performed by using a spectrum below 6 gigahertz (gigahertz, GHz), a spectrum above 6 GHz, or both a spectrum below 6 GHz and a spectrum above 6 GHz. A spectrum resource used for wireless communication is not limited in embodiments of this application.

In embodiments of this application, a function of the network device may alternatively be performed by a module (for example, a chip) in the network device, or may be performed by a control subsystem including the function of the network device. The control subsystem including the function of the network device may be a control center in the foregoing application scenarios such as the smart grid, the industrial control, the smart transportation, and the smart city. The function of the terminal device may alternatively be performed by a module (for example, a chip or a modem) in the terminal device, or may be performed by an apparatus including the function of the terminal device.

In this application, the network device sends a downlink signal or downlink information to the terminal device, and the downlink information is carried on a downlink channel. The terminal device sends an uplink signal or uplink information to the network device, and the uplink information is carried on an uplink channel. To communicate with the network device, the terminal device needs to establish a wireless connection with a cell controlled by the network device. The cell that establishes the wireless connection with the terminal device is referred to as a serving cell of the terminal device.

FIG. 1(b) is a diagram of a network device. As shown in FIG. 1(b), the network device includes one or more CUs, one or more DUs, and one or more radio units (radio units, RUs). For clarity, FIG. 1(b) shows only one CU, one DU, and one RU. The CU is configured to connect to a core network and the one or more DUs. Optionally, the CU may have a part of functions of the core network. The CU may include a CU-control plane (control plane, CP) and a CU-user plane (user plane, UP).

The CU and the DU may be configured based on functions, implemented by the CU and the DU, of protocol layers of a wireless network. For example, the CU is configured to implement functions of a packet data convergence protocol (packet data convergence protocol, PDCP) layer and an upper protocol layer (for example, a radio resource control (radio resource control, RRC) layer and/or a service data adaptation protocol (service data adaptation protocol, SDAP) layer), and the DU is configured to implement a function of a protocol layer (for example, a radio link control (radio link control, RLC) layer, a medium access control (medium access control, MAC) layer, and/or a physical (physical, PHY) layer) lower than the PDCP layer. For another example, the CU is configured to implement a function of a protocol layer (for example, an RRC layer and/or an SDAP layer) above a PDCP layer, and the DU is configured to implement functions of the PDCP layer and a lower protocol layer (for example, an RLC layer, a MAC layer, and/or a PHY layer).

The foregoing configuration of the CU and the DU is merely an example. Alternatively, functions of the CU and the DU may be configured as required. For example, the CU or the DU may be configured to have functions of more protocol layers, or the CU or the DU may be configured to have a part of processing functions of protocol layers. For example, a part of functions of the RLC layer and functions of a protocol layer above the RLC layer are set on the CU, and remaining functions of the RLC layer and functions of a protocol layer below the RLC layer are set on the DU. For another example, division into functions of the CU or the DU may be performed based on service types or other system requirements. For example, division may be performed based on a delay. Functions whose processing time needs to meet a requirement of a small delay are set on the DU, and functions whose processing time does not need to meet the requirement of the delay are set on the CU.

The DU and the RU may cooperate to jointly implement functions of the PHY layer. One DU may be connected to one or more RUs. Functions of the DU and the RU may be configured into a plurality of manners based on a design. For example, the DU is configured to implement a baseband function, and the RU is configured to implement an intermediate radio frequency function. For another example, the DU is configured to implement higher-layer functions of the PHY layer, and the RU is configured to implement lower-layer functions of the PHY layer or implement the lower-layer functions and a radio frequency function. The higher-layer functions of the physical layer may include a part of functions of the physical layer, and the part of functions are closer to the MAC layer. The lower-layer functions of the physical layer may include the other functions of the physical layer, and the other functions are closer to an intermediate radio frequency side.

In an example, the following describes signal interference in two different scenarios. This is merely an example herein, and actually does not constitute a limitation on an application scenario of embodiments of this application.

Scenario I: Integrated sensing and communications (integrated sensing and communications, ISAC) scenario

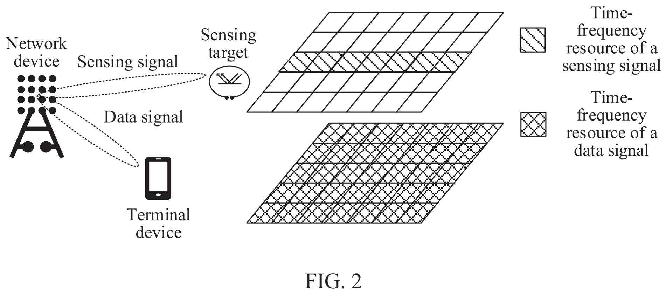

FIG. 2 is a diagram of spatial multiplexing of a sensing signal and a data signal in an ISAC scenario. Each row in the figure represents one resource block (resource block, RB), and each RB includes a plurality of REs. A network device sends a data signal (for example, a physical downlink shared channel (physical downlink shared channel, PDSCH) signal) to a terminal device, and further sends a sensing signal, to detect a location of a sensing target. A part of resource elements (resource elements, REs) in a time-frequency resource on which the sensing signal is located and a time-frequency resource on which the data signal is located overlap. In other words, spatial multiplexing is performed on the part of REs, so that the part of REs can carry both the data signal and the sensing signal. For receiving of the data signal by the terminal device, the sensing signal is an interference signal, that is, the sensing signal causes interference to receiving of the data signal by the terminal device.

The time-frequency resource on which the data signal is located may be divided based on precoding resource block groups (precoding resource block groups, PRGs). For one PRG shown in FIG. 2, the PRG includes one or more RBs. The sensing signal causes interference only to data signals on a part of REs of the PRG, and does not cause interference to data signals on all REs of the PRG. In other words, the PRG of the data signal does not completely match the time-frequency resource on which the sensing signal that causes interference to the data signal is located.

It may be understood that, the PRG is used as an example for description in this embodiment of this application, but is not limited thereto. The solution in this embodiment of this application may be applied to a case in which a time-frequency resource is divided in any grouping manner, for example, a case in which the time-frequency resource is divided based on interference resource block groups (interference resource block groups, IRGs) or resource block groups (resource block groups, RBGs).

It should be noted that, in a multiple-input and multiple-output (multiple-input and multiple-output, MIMO) transmission scenario, the data signal may also be referred to as a MIMO transmission signal.

For the ISAC scenario, the following provides classification examples in different division manners.

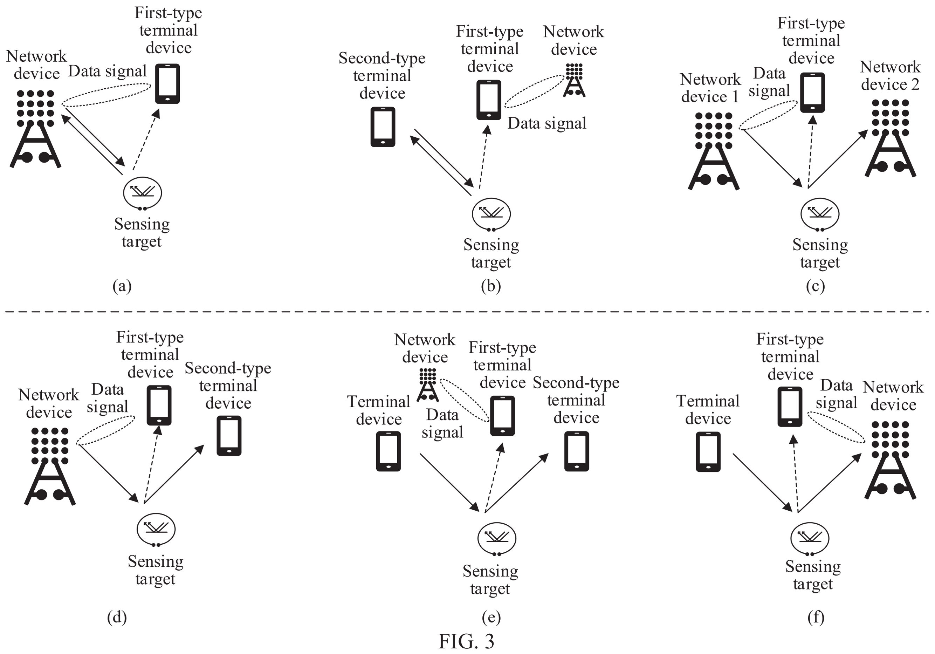

FIG. 3 is an example diagram of classification performed based on scenarios in the ISAC scenario. In the ISAC scenario, terminal devices may be classified into a first-type terminal device and a second-type terminal device. The first-type terminal device is a terminal device that receives a data signal, and the second-type terminal device is a terminal device that receives a sensing signal. The sensing signal received by the second-type terminal device may be reflected by a sensing target to the second-type terminal device after a network device, another terminal device, or the second-type terminal device sends the sensing signal to the sensing target. Optionally, the second-type terminal device further receives the data signal.

In (a) in FIG. 3, a network device sends a data signal to a first-type terminal device, and the network device further sends a sensing signal to a sensing target and receives the sensing signal reflected by the sensing target. The first-type terminal device receives the data signal, and may further receive the sensing signal. The sensing signal received by the first-type terminal device may be the sensing signal sent by the network device, or may be the sensing signal reflected by the sensing target. The sensing signal causes interference to receiving of the data signal by the first-type terminal device. Therefore, the sensing signal is an interference signal that exists when the first-type terminal device receives the data signal.

In (b) in FIG. 3, a network device sends a data signal to a first-type terminal device, and a second-type terminal device sends a sensing signal to a sensing target and receives the sensing signal reflected by the sensing target. The first-type terminal device receives the data signal, and may further receive the sensing signal. The sensing signal received by the first-type terminal device may be the sensing signal of the second-type terminal device, or may be the sensing signal reflected by the sensing target. The sensing signal causes interference to receiving of the data signal by the first-type terminal device. Therefore, the sensing signal is an interference signal that exists when the first-type terminal device receives the data signal. The second-type terminal device sends and receives the sensing signal, and may further receive the data signal sent by the network device to the first-type terminal device. The data signal causes interference to sending or receiving of the sensing signal by the second-type terminal device. Therefore, the data signal is an interference signal that exists when the second-type terminal device sends or receives the sensing signal.

In (c) in FIG. 3, a network device 1 sends a data signal to a first-type terminal device, and the network device 1 further sends a sensing signal to a sensing target. A network device 2 receives the sensing signal reflected by the sensing target. The first-type terminal device receives the data signal, and may further receive the sensing signal. The sensing signal received by the first-type terminal device may be the sensing signal sent by the network device 1, or may be the sensing signal reflected by the sensing target. The sensing signal causes interference to receiving of the data signal by the first-type terminal device. Therefore, the sensing signal is an interference signal that exists when the first-type terminal device receives the data signal.

In (d) in FIG. 3, a network device sends a data signal to a first-type terminal device, and the network device further sends a sensing signal to a sensing target. A second-type terminal device receives the sensing signal reflected by the sensing target. The first-type terminal device receives the data signal, and may further receive the sensing signal. The sensing signal received by the first-type terminal device may be the sensing signal sent by the network device, or may be the sensing signal reflected by the sensing target. The sensing signal causes interference to receiving of the data signal by the first-type terminal device. Therefore, the sensing signal is an interference signal that exists when the first-type terminal device receives the data signal. The second-type terminal device receives the sensing signal, and may further receive the data signal sent by the network device to the first-type terminal device. The data signal causes interference to receiving of the sensing signal by the second-type terminal device. Therefore, the data signal is an interference signal that exists when the second-type terminal device receives the sensing signal.

In (e) in FIG. 3, a network device sends a data signal to a first-type terminal device. A terminal device sends a sensing signal to a sensing target. A second-type terminal device receives the sensing signal reflected by the sensing target. The first-type terminal device receives the data signal, and may further receive the sensing signal. The sensing signal received by the first-type terminal device may be the sensing signal sent by the terminal device, or may be the sensing signal reflected by the sensing target. The sensing signal causes interference to receiving of the data signal by the first-type terminal device. Therefore, the sensing signal is an interference signal that exists when the first-type terminal device receives the data signal. The second-type terminal device receives the sensing signal, and may further receive the data signal sent by the network device to the first-type terminal device. The data signal causes interference to receiving of the sensing signal by the second-type terminal device. Therefore, the data signal is an interference signal that exists when the second-type terminal device receives the sensing signal.

In (f) in FIG. 3, a network device sends a data signal to a first-type terminal device. A terminal device sends a sensing signal to a sensing target. The network device receives the sensing signal reflected by the sensing target. The first-type terminal device receives the data signal, and may further receive the sensing signal. The sensing signal received by the first-type terminal device may be the sensing signal sent by the terminal device, or may be the sensing signal reflected by the sensing target. The sensing signal causes interference to receiving of the data signal by the first-type terminal device. Therefore, the sensing signal is an interference signal that exists when the first-type terminal device receives the data signal.

For the second-type terminal device, if the second-type terminal device further receives, when sending or receiving a sensing signal, a data signal sent by the network device or another terminal device to the second-type terminal device, the data signal and the sensing signal are interference signals of each other.

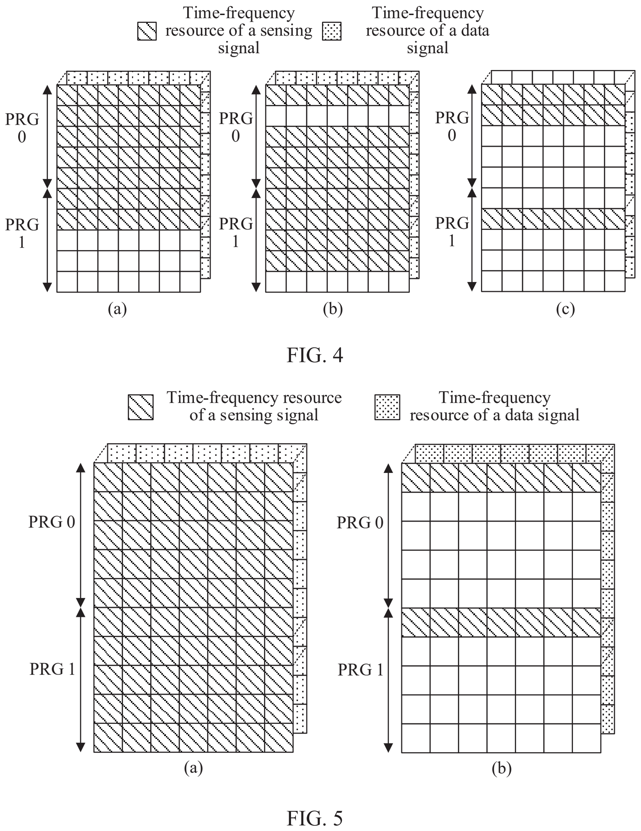

FIG. 4 is an example diagram of classification performed based on time-frequency resource overlap (overlap) in the ISAC scenario. Each row in the figure represents one RB. In (a) in FIG. 4, a time-frequency resource of a sensing signal and a PRG of a data signal partially overlap. The partial overlapping herein means that an overlapping proportion is less than or equal to a first threshold and is greater than 0. In (b) in FIG. 4, a time-frequency resource of a sensing signal and a PRG of a data signal completely overlap. The complete overlapping herein means that an overlapping proportion is greater than a threshold. In other words, when the overlapping proportion is greater than the threshold, it is considered that the time-frequency resource of the sensing signal and the PRG of the data signal completely overlap. In (c) in FIG. 4, a time-frequency resource of a sensing signal and a PRG of a data signal do not overlap, that is, an overlapping proportion is equal to 0.

FIG. 5 is an example diagram of classification performed based on waveforms in the ISAC scenario. Each row in the figure represents one RB. In (a) in FIG. 5, a sensing signal and a data signal belong to a same waveform, and a time-frequency resource of the sensing signal and a PRG of the data signal completely overlap. The complete overlapping herein means that an overlapping proportion is greater than a threshold. In other words, when the overlapping proportion is greater than the threshold, it is considered that the time-frequency resource of the sensing signal and the PRG of the data signal completely overlap. In (b) in FIG. 5, a sensing signal and a data signal belong to different waveforms, and a time-frequency resource of the sensing signal and a PRG of the data signal partially overlap.

Scenario II: Reflection scenario

The reflection scenario includes a reconfigurable intelligent surface (reconfigurable intelligent surface, RIS) scenario and an intelligent reflecting surface (intelligent reflecting surface, IRS) scenario.

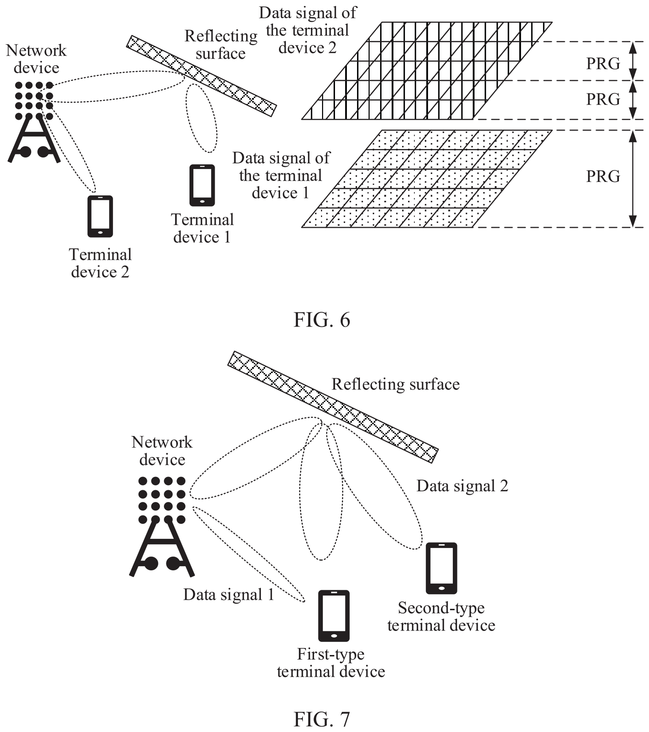

FIG. 6 is an example diagram of mismatch between PRGs of different data signals in the reflection scenario. Each row in the figure represents one RB. A terminal device 1 receives a reflected data signal, and a terminal device 2 receives a data signal that is not reflected. A size of a PRG of the data signal received by the terminal device 1 is different from a size of a PRG of the data signal received by the terminal device 2. Therefore, the PRG of the data signal received by the terminal device 1 does not match the PRG of the data signal received by the terminal device 2. In the example in FIG. 6, the PRG of the data signal received by the terminal device 1 occupies five RBs, and the PRG of the data signal received by the terminal device 2 occupies two RBs. Therefore, the PRG of the data signal received by the terminal device 1 is larger than the PRG of the data signal received by the terminal device 2. In other words, a granularity of the PRG corresponding to the terminal device 1 is different from a granularity of the PRG corresponding to the terminal device 2.

FIG. 7 is an example diagram of classification performed based on scenarios in the reflection scenario. A first-type terminal device normally receives a data signal 1, and a second-type terminal device receives a reflected data signal 2. When receiving the data signal 1, the first-type terminal device may further receive the data signal 2. The data signal 2 causes interference to receiving of the data signal 1 by the first-type terminal device. Therefore, the data signal 2 is an interference signal that exists when the first-type terminal device receives the data signal 1. When receiving the data signal 2, the second-type terminal device may further receive the data signal 1. The data signal 1 causes interference to receiving of the data signal 2 by the second-type terminal device. Therefore, the data signal 1 is an interference signal that exists when the second-type terminal device receives the data signal 2.

In the current technology, the terminal device performs DMRS resource bundling (bundling) based on a PRG by default based on protocol predefinition, to perform channel and interference estimation. In other words, the terminal device considers by default that the interference signal covers all REs of the PRG. In addition, one terminal device has only one PRG value in one time unit, and each PRG value is two RBs, four RBs, or the like.

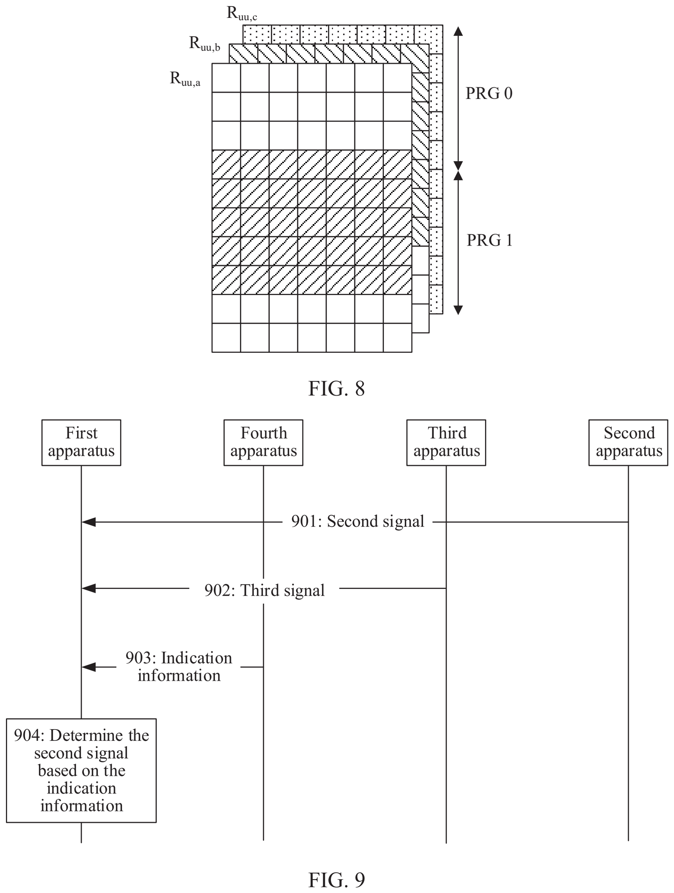

The following describes a current interference estimation method with reference to an example in FIG. 8. FIG. 8 is a diagram of three interference channels that are independent of each other and have different distributions. Each row in the figure represents one RB. For a specific RE, a model of a received signal on the RE is:

$$\hat{\mathbf{y}} = \mathbf{W} \cdot \mathbf{r}$$

$\hat{\mathbf{y}}$ is a transmission signal on which equalization is performed, that is, a transmission signal on which interference cancellation is performed, and a dimension is a complex number vector of nlayer* 1, where nlayer is a quantity of streams at a receive end. The transmission signal may be a data signal, a sensing signal, or the like.

$\mathbf{r}$ is a received signal on which equalization is not performed, that is, the received signal is a superimposed signal of a transmission signal and at least one interference signal, and a dimension is nrx*1, where nrx is a quantity of receiver antennas. In the example in FIG. 8, three interference signals, namely, interference signals a, b, and c, exist.

$\mathbf{W}$ is an equalization coefficient matrix, and a dimension is nlayer*nrx. The expression is as follows:

$$\mathbf{W} = \widehat{\mathbf{HP}}^{\mathrm{H}} \cdot \left( \widehat{\mathbf{HP}} \cdot \widehat{\mathbf{HP}}^{\mathrm{H}} + \mathbf{R}_{\mathrm{uu}} + \sigma^2 \mathbf{I} \right)^{-1}$$

$\widehat{\mathbf{HP}}$ is an estimation value of an equivalent channel matrix of a terminal device on an RE, $\widehat{\mathbf{HP}}^{\mathrm{H}}$ is a conjugate transposed matrix of $\widehat{\mathbf{HP}}$, and a dimension is nrx*nlayer. $\sigma^2$ represents an estimation value of a noise floor power. $\mathbf{I}$ is a unit matrix, and a dimension is nrx*nrx. $\mathbf{R}_{\mathrm{uu}}$ is an interference covariance matrix.

Using the foregoing three independent interference channels as an example, the expression of $\mathbf{R}_{\mathrm{uu}}$ is as follows:

$$\mathbf{R}_{\mathrm{uu}} = \mathbf{R}_{\mathrm{uu,a}} + \mathbf{R}_{\mathrm{uu,b}} + \mathbf{R}_{\mathrm{uu,c}}$$

$R_{uu,a}$ , $R_{uu,b}$, and $R_{uu,c}$ respectively represent covariance matrices of the three mutually independent interference channels. When distributions of the three independent interference channels in time domain or frequency domain are not completely the same, differentiated processing needs to be performed on $R_{uu}$ in each PRG.

Refer to FIG. 8. For the interference signal a, the interference signal a exists on a part of REs of a PRG 0, and the interference signal a does not exist on the other REs. Similarly, the interference signal a exists on a part of REs of a PRG 1, and the interference signal a does not exist on the other REs. According to a current method, the terminal device considers by default that the interference signal a exists on all PRGs. Therefore, the terminal device calculates, in a manner of averaging interference signals a on all REs in the PRG 0, $R_{uu,a}$ corresponding to each RE in the PRG 0, and calculates, in a manner of averaging interference signals a on all REs in the PRG 1, $R_{uu,a}$ corresponding to each RE in the PRG 1.

Similarly, the terminal device calculates, in a manner of averaging interference signals b on all the REs in the PRG 0, $R_{uu,b}$ corresponding to each RE in the PRG 0, and calculates, in a manner of averaging interference signals b on all the REs in the PRG 1, $R_{uu,b}$ corresponding to each RE in the PRG 1. Therefore, each RE corresponds to the same covariance matrix $R_{uu,b}$.

Similarly, the terminal device calculates, in a manner of averaging interference signals c on all the REs in the PRG 0, $R_{uu,c}$ corresponding to each RE in the PRG 0, and calculates, in a manner of averaging interference signals c on all the REs in the PRG 1, $R_{uu,c}$ corresponding to each RE in the PRG 1. Therefore, each RE corresponds to the same covariance matrix $R_{uu,c}$.

In the current technology, the terminal device does not know a time-frequency resource location actually occupied by the interference signal. Therefore, the terminal device considers by default that the interference signal exists on all the REs in the PRG, and then calculates $R_{uu}$ in a manner of averaging interference signals on all REs in one PRG. This manner is not applicable to a scenario in which a PRG of a transmission signal does not completely match a time-frequency resource of an interference signal. Specifically, in the scenario in which the PRG of the transmission signal does not completely match the time-frequency resource of the interference signal, for example, the interference signal a and the interference signal b, if $R_{uu}$ is calculated in a manner of averaging interference signals on all REs in the PRG, interference calculation on each RE may be inaccurate, affecting equalization quality and causing deterioration of system spectral efficiency. This is because there may be no interference signal on an RE actually, and if $R_{uu}$ is calculated in the manner of averaging the interference signals on all the REs in the PRG, it is considered that an interference signal exists on these REs. Therefore, equalization quality is reduced.

FIG. 9 is a schematic flowchart of a communication method according to an embodiment of this application. The method includes the following steps.

Step 901: A second apparatus sends a second signal to a first apparatus.

Step 902: A third apparatus sends a third signal to the first apparatus, where the third signal causes interference to the second signal.

The third signal is also referred to as an interference signal of the second signal.

A resource occupied by the third signal and a resource occupied by the second signal totally or partially overlap. The complete overlapping herein means that an overlapping proportion is greater than a threshold. In other words, when the overlapping proportion is greater than the threshold, it is considered that the resource occupied by the third signal and the resource occupied by the second signal completely overlap.

In an implementation method, if the second apparatus and the third apparatus are a same apparatus, the second signal and the third signal may be sent in a spatial multiplexing manner. For example, if a first signal is obtained through spatial multiplexing performed on the second signal and the third signal, the first apparatus receives the first signal, the first signal includes both the second signal and the third signal, and the third signal causes the interference to the second signal. Therefore, the first apparatus needs to cancel the third signal from the first signal to obtain the second signal.

In another implementation method, the second signal and the third signal occupy different time-frequency resources, but signal superimposition occurs when the second signal and the third signal arrive at the first apparatus, and a superimposed signal is referred to as a first signal. In this case, the first apparatus receives the first signal, the first signal includes both the second signal and the third signal, and the third signal causes the interference to the second signal. Therefore, the first apparatus needs to cancel the third signal from the first signal to obtain the second signal.

Step 903: A fourth apparatus sends indication information to the first apparatus, where the indication information indicates the resource occupied by the third signal.

The resource that is occupied by the third signal and that is indicated by the indication information includes a time domain resource and/or a frequency domain resource.

In an implementation method, the indication information further indicates at least one of the following information:

   (1) a port number of the third signal, where the port number indicates a source of the third signal;
   (2) a sequence of the third signal; and
   (3) scrambling code information of the third signal.

Optionally, when calculating the interference caused by the third information to the second signal, the first apparatus may use one or more of the port number, the sequence, or the scrambling code information of the third signal.

Step 904: The first apparatus determines the second signal based on the indication information.

The first apparatus may be a terminal device or a module (for example, a chip) used in the terminal device.

The second apparatus may be a network device or a module (for example, a chip) used in the network device, or a terminal device or a module (for example, a chip) used in the terminal device.

The third apparatus may be a network device or a module (for example, a chip) used in the network device, or a terminal device or a module (for example, a chip) used in the terminal device.

The fourth apparatus may be a network device or a module (for example, a chip) used in the network device, or a terminal device or a module (for example, a chip) used in the terminal device.

The second apparatus, the third apparatus, and the fourth apparatus may be same apparatuses (that is, a same apparatus), or may be different apparatuses (that is, not a same apparatus), or any two of the apparatuses are the same and different from the other apparatus (that is, any two of the apparatuses are a same apparatus and the other apparatus is not the same apparatus). This is not limited in this application.

Optionally, there may be a plurality of third signals that cause interference, and the third signals may come from a plurality of third apparatuses.

The following describes specific implementations of the first apparatus, the second apparatus, the third apparatus, and the fourth apparatus with reference to the scenario examples in FIG. 3 and FIG. 7.

For (a) in FIG. 3, the second apparatus, the third apparatus, and the fourth apparatus are the same (that is, a same apparatus) and are all network devices, and the first apparatus is a first-type terminal device. The second signal is a data signal, and the third signal is a sensing signal.

For (b) in FIG. 3, in an implementation method, the second apparatus and the fourth apparatus are the same (that is, a same apparatus) and are both network devices, the third apparatus is a second-type terminal device, and the first apparatus is a first-type terminal device. The second signal is a data signal, and the third signal is a sensing signal. In another implementation method, the second apparatus is a network device, the third apparatus and the fourth apparatus are the same (that is, a same apparatus) and are both second-type terminal devices, and the first apparatus is a first-type terminal device. The second signal is a data signal, and the third signal is a sensing signal.

For (c) in FIG. 3, the second apparatus, the third apparatus, and the fourth apparatus are the same (that is, a same apparatus) and are all network devices 1, and the first apparatus is a first-type terminal device. The second signal is a data signal, and the third signal is a sensing signal.

For (d) or (e) in FIG. 3, in an implementation method, the second apparatus, the third apparatus, and the fourth apparatus are the same (that is, a same apparatus) and are all network devices, and the first apparatus is a first-type terminal device. The second signal is a data signal, and the third signal is a sensing signal. In another implementation method, the second apparatus, the third apparatus, and the fourth apparatus are the same (that is, a same apparatus) and are all network devices, and the first apparatus is a second-type terminal device. The second signal is a sensing signal, and the third signal is a data signal.

For (f) in FIG. 3, the second apparatus and the fourth apparatus are the same (that is, a same apparatus) and are both network devices, the third apparatus is a terminal device that sends a sensing signal, and the first apparatus is a first-type terminal device. The second signal is a data signal, and the third signal is a sensing signal.

For FIG. 7, in an implementation method, the second apparatus, the third apparatus, and the fourth apparatus are the same (that is, a same apparatus) and are all network devices, and the first apparatus is a first-type terminal device. The second signal is a data signal 1, and the third signal is a data signal 2. In another implementation method, the second apparatus, the third apparatus, and the fourth apparatus are the same (that is, a same apparatus) and are all network devices, and the first apparatus is a second-type terminal device. The second signal is a data signal 2, and the third signal is a data signal 1.

In the foregoing solutions, the first apparatus receives the first signal, where the first signal includes the second signal and the third signal that causes the interference to the second signal. The first apparatus learns of, based on the received indication information, the resource occupied by the third signal, so that the interference caused by the third signal can be accurately determined based on the resource occupied by the third signal. This helps accurately cancel the third signal from the first signal to obtain the second signal, to implement correct signal receiving and improve signal transmission quality.

According to the foregoing descriptions, in the conventional technology, the terminal device cannot accurately learn of a location of the resource occupied by the third signal that causes the interference to the second signal, and the terminal device considers by default that there is an interference signal on all REs of a PRG. Therefore, interference signal cancellation may not be accurate.

In an implementation method, the first apparatus determines, based on the indication information, an interference estimation value on the resource occupied by the third signal, and then determines the second signal from the first signal based on the interference estimation value.

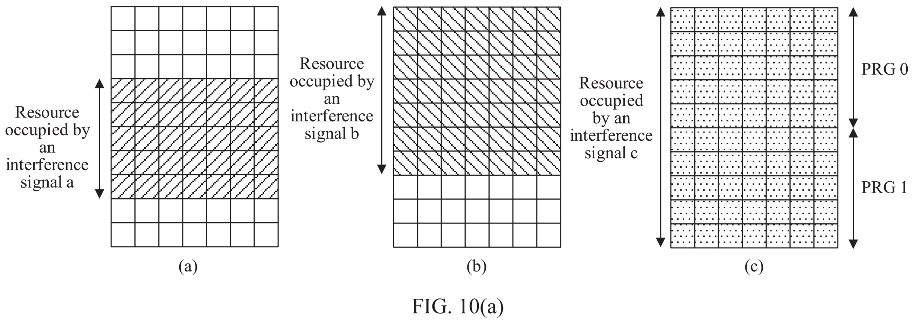

For the example in FIG. 8, if an interference estimation value on each RE is calculated according to the method in this embodiment of this application, resources occupied by the interference signal a, the interference signal b, and the interference signal c may be respectively indicated by using three different pieces of indication information. FIG. 10(a) is an example diagram of indicating a resource occupied by an interference signal according to an embodiment of this application. Each row in the figure represents one RB. For example, indication information 1 indicates a resource occupied by an interference signal a, indication information 2 indicates a resource occupied by an interference signal b, and indication information 3 indicates a resource occupied by an interference signal c. The interference signal a, the interference signal b, and the interference signal c herein are all specific examples of the third signal.

For the interference signal a, the interference signal a exists on a part of REs of a PRG 0, and the interference signal a does not exist on the other REs. Similarly, the interference signal a exists on a part of REs of a PRG 1, and the interference signal a does not exist on the other REs. According to the method in this embodiment of this application, the first apparatus may calculate, in a manner of averaging interference signals a on the resource indicated by the indication information 1, $R_{uu,a}$ corresponding to each RE on the resource indicated by the indication information 1. For a resource that is not indicated, it indicates that there is no interference signal a on the resource.

Similarly, the first apparatus may calculate, in a manner of averaging interference signals b on the resource indicated by the indication information 2, $R_{uu,b}$ corresponding to each RE on the resource indicated by the indication information 2. For a resource that is not indicated, it indicates that there is no interference signal b on the resource.

Similarly, the first apparatus may calculate, in a manner of averaging interference signal c on the resource indicated by the indication information 3, $R_{uu,c}$ corresponding to each RE on the resource indicated by the indication information 3. For a resource that is not indicated, it indicates that there is no interference signal c on the resource.

The following describes a plurality of implementation methods of the indication information in embodiments of this application.

Method I: The indication information indicates a start location and a size of the resource occupied by the third signal.

For example, the indication information includes a PRG start location, a PRG size, and a quantity of PRGs. The PRG start location indicates the start location of the resource occupied by the third signal, the PRG size indicates a quantity of RBs occupied by one PRG, the quantity of PRGs indicates a quantity of PRGs occupied by the third signal, and the PRG size and the quantity of PRGs jointly indicate the size of the resource occupied by the third signal. The quantity of PRGs may be a positive integer, or may be a decimal or a fraction. This manner is applicable to a scenario in which the third signal occupies a part or all of resources of one or more PRGs. For example, for the interference signal c, the resource occupied by the interference signal c may be indicated in this manner.

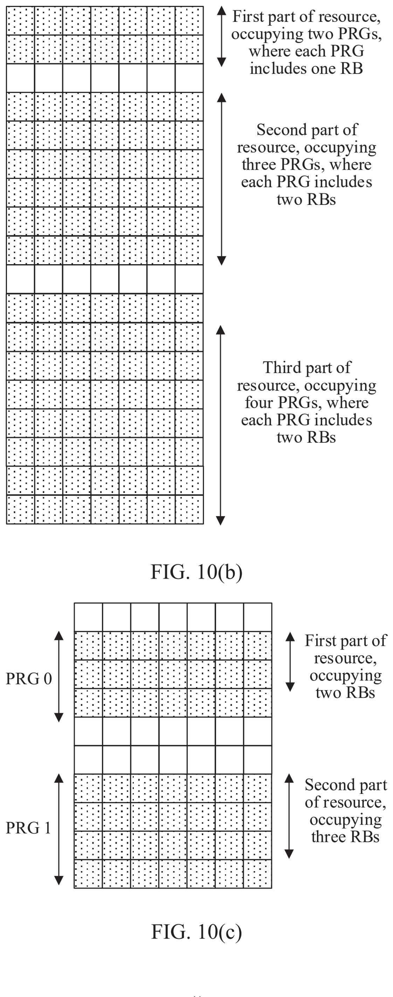

For another example, the indication information includes at least two sets of PRG information, and each set of PRG information includes a PRG start location, a PRG size, and a quantity of PRGs. The PRG start location indicates a start location of a part of the resource occupied by the third signal, the PRG size indicates a quantity of RBs occupied by one PRG, the quantity of PRGs indicates a quantity of PRGs occupied by the part of the resource, and the PRG size and the quantity of PRGs jointly indicate a size of the part of the resource. One PRG includes one or more consecutive RBs. The quantity of PRGs may be a positive integer, or may be a decimal, a fraction, or the like. FIG. 10(b) is an example diagram of indicating a resource occupied by an interference signal according to an embodiment of this application. Each row in the figure represents one RB. In this example, the resource occupied by the third signal includes three parts of resources. A first part of resource occupies two PRGs and each PRG includes one RB, a second part of resource occupies three PRGs and each PRG includes two RBs, and a third part of resource occupies four PRGs and each PRG includes two RBs. Therefore, the resource occupied by the third signal may be indicated by using three sets of PRG information. For example, a PRG start location in a first set of PRG information indicates a start location of the first part of resource, a PRG size in the first set of PRG information is one RB, and a quantity of PRGs in the first set of PRG information is two PRGs. Therefore, a size of the first part of resource is two RBs. A PRG start location in a second set of PRG information indicates a start location of the second part of resource, a PRG size in the second set of PRG information is two RBs, and a quantity of PRGs in the second set of PRG information is three PRGs. Therefore, a size of the second part of resource is six RBs. A PRG start location in a third set of PRG information indicates a start location of the third part of resource, a PRG size in the third set of PRG information is two RBs, and a quantity of PRGs in the third set of PRG information is four PRGs. Therefore, a size of the third part of resource is eight RBs. FIG. 10(c) is an example diagram of indicating a resource occupied by an interference signal according to an embodiment of this application. Each row in the figure represents one RB. In this example, the resource occupied by the third signal includes two parts of resources. A first part of resource occupies two RBs in a PRG 0, where the PRG 0 includes three RBs; and a second part of resource occupies three RBs in a PRG 1, where the PRG 1 includes four RBs. Therefore, the resource occupied by the third signal may be indicated by using two sets of PRG information. For example, a PRG start location in a first set of PRG information indicates a start location of the first part of resource, a PRG size in the first set of PRG information indicates a quantity of RBs occupied by one PRG, and a quantity of PRGs in the first set of PRG information indicates a quantity of PRGs occupied by the first part of resource. Specifically, the PRG size in the first set of PRG information is three RBs, and the quantity of PRGs in the first set of PRG information is 2/3. A PRG start location in a second set of PRG information indicates a start location of the second part of resource, a PRG size in the second set of PRG information indicates a quantity of RBs occupied by one PRG, and a quantity of PRGs in the second set of PRG information indicates a quantity of PRGs occupied by the first part of resource. Specifically, the PRG size in the second set of PRG information is four RBs, and the quantity of PRGs in the first set of PRG information is 3/4.

For another example, the indication information includes a reference point, an offset value, and a resource size, the reference point and the offset value indicate the start location of the resource occupied by the third signal, and the resource size indicates the size of the resource occupied by the third signal. This manner is applicable to a scenario in which the third signal occupies a consecutive resource. For example, for the interference signals a, b, and c, the resource occupied by the interference signal a, b, or c may be indicated in this manner.

Method II: The indication information is a bitmap, and first information in the bitmap indicates at least one resource element in the resource occupied by the third signal.

Each bit in the bitmap corresponds to K REs, K is a positive integer, and a value of each bit is first information or second information. The first information is 1, and the second information is 0, or the first information is 0, and the second information is 1.

For example, if the bitmap is 1111100000101100101, K = 1, and the first information is 1, interference signals exist on REs corresponding to all bits whose values are 1 in the bitmap.

The following describes a multiplexing manner of a time-frequency resource that may exist between a data signal and a sensing signal.

Scenario 1: The first apparatus in the embodiment in FIG. 9 is the first-type terminal device in the scenario in FIG. 3. The first-type terminal device receives a data signal, a sensing signal is an interference signal of the data signal, and the sensing signal is mapped by multiplexing a resource of a DMRS port.

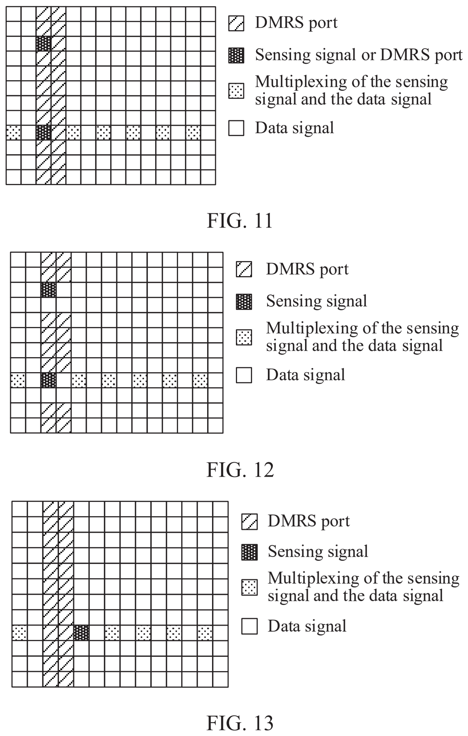

FIG. 11 is an example diagram of resource mapping between a sensing signal and a data signal. Each box in the figure represents one RE. In this example, a part of the sensing signal uses an existing DMRS port, that is, signals carried on a part of REs represent both a DMRS signal and a sensing signal. The other part of the sensing signal and the data signal are multiplexed on a same RE, that is, the RE carries both the data signal and the sensing signal.

FIG. 12 is another example diagram of resource mapping between a sensing signal and a data signal. Each box in the figure represents one RE. In this example, a part of the sensing signal uses an idle DMRS port, that is, a part of REs independently carry the sensing signal. The other part of the sensing signal and the data signal are multiplexed on a same RE, that is, the RE carries both the data signal and the sensing signal.

Scenario 2: The first apparatus in the embodiment in FIG. 9 is the first-type terminal device in the scenario in FIG. 3. The first-type terminal device receives a data signal, a sensing signal is an interference signal of the data signal, and the sensing signal is mapped by using an independent resource.

FIG. 13 is another example diagram of resource mapping between a sensing signal and a data signal. Each box in the figure represents one RE. In this example, a part of the sensing signal independently occupies a time-frequency resource on which a non-DMRS port is located, that is, the sensing signal is mapped by using an independent resource. The other part of the sensing signal and the data signal are multiplexed on a same RE, that is, the RE carries both the data signal and the sensing signal.

Scenario 3: The first apparatus in the embodiment in FIG. 9 is the second-type terminal device in the scenario in FIG. 3. The second-type terminal device receives only a sensing signal, and does not perform data transmission. A data signal received by the second-type terminal device is an interference signal of the sensing signal. The data signal is sent by a network device to a first-type terminal device but may be received by the second-type terminal device, and the sensing signal is mapped by multiplexing a resource of a DMRS port.

For an example of resource mapping between the sensing signal and the data signal in this scenario, refer to FIG. 11 and FIG. 12.

Scenario 4: The first apparatus in the embodiment in FIG. 9 is the second-type terminal device in the scenario in FIG. 3. The second-type terminal device receives a sensing signal, and also performs data transmission. A data signal 1 and a data signal 2 received by the second-type terminal device are interference signals of the sensing signal. The data signal 1 is sent by a network device to a first-type terminal device but may be received by the second-type terminal device, the data signal 2 is sent by the network device to the second-type terminal device, and the sensing signal is mapped by multiplexing a resource of a DMRS port.

For an example of resource mapping between the sensing signal and the data signal in this scenario, refer to FIG. 11 and FIG. 12.

Scenario 5: The first apparatus in the embodiment in FIG. 9 is the first-type terminal device in the scenario in FIG. 7. The first-type terminal device receives a data signal 1 and a data signal 2. The data signal 1 is sent by a network device to the first-type terminal device, the data signal 2 is sent by the network device to a second-type terminal device but may be received by the first-type terminal device, the data signal 2 is an interference signal of the data signal 1, the data signal 1 is transmitted by using a narrow-band beam, and the data signal 2 is transmitted by using a wide-band beam.

For an example of resource mapping between the data signal 1 and the data signal 2 in this scenario, refer to FIG. 6.

Scenario 6: The first apparatus in the embodiment in FIG. 9 is the second-type terminal device in the scenario in FIG. 7. The second-type terminal device receives a data signal 1 and a data signal 2. The data signal 1 is sent by a network device to a first-type terminal device but may be received by the second-type terminal device, the data signal 2 is sent by the network device to the second-type terminal device, the data signal 1 is an interference signal of the data signal 2, the data signal 1 is transmitted by using a narrow-band beam, and the data signal 2 is transmitted by using a wide-band beam.

For an example of resource mapping between the data signal 1 and the data signal 2 in this scenario, refer to FIG. 6.

It may be understood that, to implement the functions in the foregoing embodiments, the terminal device or the network device includes corresponding hardware structures and/or software modules for performing the functions. A person skilled in the art should be easily aware that, in combination with the units and the method steps in the examples described in embodiments disclosed in this application, this application can be implemented by using hardware or a combination of hardware and computer software. Whether a function is performed by hardware or hardware driven by computer software depends on particular application scenarios and design constraint conditions of the technical solutions.

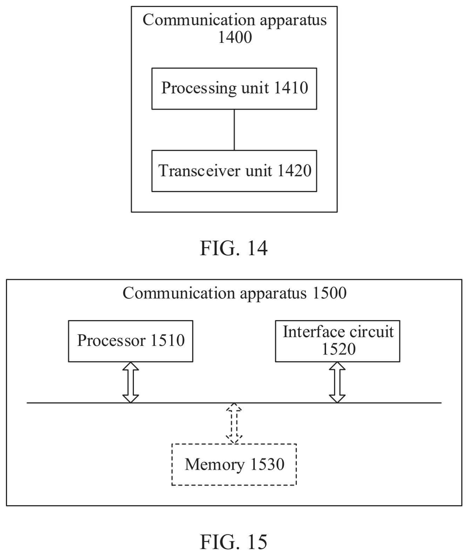

FIG. 14 and FIG. 5 are diagrams of possible structures of communication apparatuses according to embodiments of this application. These communication apparatuses may be configured to implement functions of the terminal device or the network device in the foregoing method embodiments. Therefore, beneficial effects of the foregoing method embodiments can also be implemented. In embodiments of this application, the communication apparatus may be the terminal device or the network device, or may be a module (for example, a chip) used in the terminal device or the network device.

As shown in FIG. 14, the communication apparatus 1400 includes a processing unit 1410 and a transceiver unit 1420. The communication apparatus 1400 is configured to implement functions of the terminal device or the network device in the foregoing method embodiments.

When the communication apparatus 1400 is configured to implement functions of the first apparatus in the foregoing method embodiments, the transceiver unit 1420 is configured to: receive a first signal, where the first signal includes a second signal and a third signal, and the third signal is a signal that causes interference to the second signal; and receive indication information, where the indication information indicates a resource occupied by the third signal; and the processing unit 1410 is configured to determine the second signal from the first signal based on the indication information.

In a possible implementation method, that the processing unit 1410 is configured to determine the second signal from the first signal based on the indication information specifically includes: determining, based on the indication information, an interference estimation value on the resource occupied by the third signal; and determining the second signal from the first signal based on the interference estimation value.

In a possible implementation method, the indication information indicates a start location and a size of the resource occupied by the third signal.

In a possible implementation method, the indication information includes a PRG start location, a PRG size, and a quantity of PRGs, the PRG start location indicates the start location of the resource occupied by the third signal, and the PRG size and the quantity of PRGs indicate the size of the resource occupied by the third signal.

In a possible implementation method, the indication information includes at least two sets of PRG information, and each set of PRG information includes a PRG start location, a PRG size, and a quantity of PRGs. The PRG start location indicates a start location of a part of the resource occupied by the third signal, and the PRG size and the quantity of PRGs indicate a size of the part of the resource.

In a possible implementation method, the indication information includes a reference point, an offset value, and a resource size, the reference point and the offset value indicate the start location of the resource occupied by the third signal, and the resource size indicates the size of the resource occupied by the third signal.

In a possible implementation method, the indication information is a bitmap, and first information in the bitmap indicates at least one resource element in the resource occupied by the third signal.

In a possible implementation method, the resource occupied by the third signal and a resource occupied by the second signal totally or partially overlap.

In a possible implementation method, the indication information further indicates at least one of the following information:

a port number of the third signal, where the port number indicates a source of the third signal;
a sequence of the third signal; and
scrambling code information of the third signal.

When the communication apparatus 1400 is configured to implement functions of the second apparatus, the third apparatus, and the fourth apparatus in the foregoing method embodiments, the processing unit 1410 is configured to control the transceiver unit 1420 to send a second signal to the terminal device; and send indication information to the terminal device, where the indication information indicates a resource occupied by a third signal that causes interference to the second signal.

In a possible implementation method, the processing unit 1410 is further configured to control the transceiver unit 1420 to send the third signal to the terminal device.

In a possible implementation method, the indication information indicates a start location and a size of the resource occupied by the third signal.

In a possible implementation method, the indication information includes a PRG start location, a PRG size, and a quantity of PRGs, the PRG start location indicates the start location of the resource occupied by the third signal, and the PRG size and the quantity of PRGs indicate the size of the resource occupied by the third signal.

In a possible implementation method, the indication information includes a reference point, an offset value, and a resource size, the reference point and the offset value indicate the start location of the resource occupied by the third signal, and the resource size indicates the size of the resource occupied by the third signal.

In a possible implementation method, the indication information is a bitmap, and first information in the bitmap indicates at least one resource element in the resource occupied by the third signal.

In a possible implementation method, the resource occupied by the third signal and a resource occupied by the second signal totally or partially overlap.

In a possible implementation method, the indication information further indicates at least one of the following information:

> a port number of the third signal, where the port number indicates a source of the third signal;
> a sequence of the third signal; and
> scrambling code information of the third signal.

For more detailed descriptions of the processing unit 1410 and the transceiver unit 1420, directly refer to related descriptions in the foregoing method embodiments. Details are not described herein again.

As shown in FIG. 15, the communication apparatus 1500 includes a processor 1510 and an interface circuit 1520. The processor 1510 and the interface circuit 1520 are coupled to each other. It may be understood that, the interface circuit 1520 may be a transceiver or an input/output interface. Optionally, the communication apparatus 1500 may further include a memory 1530, configured to: store instructions executed by the processor 1510, store input data that the processor 1510 needs to run the instructions, or store data generated after the processor 1510 runs the instructions.

When the communication apparatus 1500 is configured to implement the foregoing method embodiments, the processor 1510 is configured to implement a function of the processing unit 1410, and the interface circuit 1520 is configured to implement a function of the transceiver unit 1420.

It may be understood that, the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor, or may be any conventional processor.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a compact disc read-only memory (compact disc read-only memory, CD-ROM), or any other form of storage medium well-known in the art. For example, a storage medium is coupled to the processor, so that the processor can read information from the storage medium and write information into the storage medium. Certainly, the storage medium may alternatively be a component of the processor. The processor and the storage medium may be disposed in the ASIC. In addition, the ASIC may be located in the terminal device or the network device. Certainly, the processor and the storage medium may alternatively exist in an access network device or a terminal as discrete components.

All or a part of the foregoing embodiments may be implemented by using software, hardware, firmware, or any combination thereof. When the software is used for implementation, all or a part of embodiments may be implemented in a form of a computer program product. The computer program product includes one or more computer programs or instructions. The computer program (English: Computer Program) is a set of instructions that instruct each step of an electronic computer or another device having a message processing capability, is usually written in a program design language, and is run in a target architecture. When the computer programs or the instructions are loaded and executed on a computer, all or a part of the procedures or functions in embodiments of this application are executed. The computer may be a general-purpose computer, a dedicated computer, a computer network, or another programmable apparatus. The computer program or the instructions may be stored in a computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, "at least one" means one or more, and "a plurality of" means two or more. "And/or" describes an association relationship between associated objects, and represents that three relationships may exist. For example, A and/or B may represent the following cases: Only A exists, both A and B exist, and only B exists, where A and B may be singular or plural. In the text descriptions of this application, the character "/" generally represents an "or" relationship between the associated objects. In a formula in this application, the character "/" represents a "division" relationship between the associated objects.

It may be understood that, various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, comprising:

   receiving a first signal, wherein the first signal comprises a second signal and a third signal, and the third signal is a signal that causes interference to the second signal;
   receiving indication information, wherein the indication information indicates a resource occupied by the third signal; and
   determining the second signal from the first signal based on the indication information.

2. The method according to claim 1, wherein the determining the second signal from the first signal based on the indication information comprises:

   determining, based on the indication information, an interference estimation value on the resource occupied by the third signal; and
   determining the second signal from the first signal based on the interference estimation value.

3. The method according to claim 1 or 2, wherein the indication information indicates a start location and a size of the resource occupied by the third signal.

4. The method according to claim 3, wherein the indication information comprises a reference point, an offset value, and a resource size, the reference point and the offset value indicate the start location of the resource occupied by the third signal, and the resource size indicates the size of the resource occupied by the third signal.

5. The method according to claim 3, wherein the indication information comprises a precoding resource block group PRG start location, a PRG size, and a quantity of PRGs, the PRG start location indicates the start location of the resource occupied by the third signal, and the PRG size and the quantity of PRGs indicate the size of the resource occupied by the third signal.

6. The method according to claim 1 or 2, wherein the indication information is a bitmap, and first information in the bitmap indicates at least one resource element in the resource occupied by the third signal.

7. The method according to any one of claims 1 to 6, wherein the resource occupied by the third signal and a resource occupied by the second signal totally or partially overlap.

8. The method according to any one of claims 1 to 7, wherein the indication information further indicates at least one of the following information:

   a port number of the third signal, wherein the port number indicates a source of the third signal;
   a sequence of the third signal; and
   scrambling code information of the third signal.

9. A communication method, comprising:

> sending a second signal to a terminal device; and
> sending indication information to the terminal device, wherein the indication information indicates a resource occupied by a third signal that causes interference to the second signal.

10. The method according to claim 9, wherein the method further comprises:
sending the third signal to the terminal device.

11. The method according to claim 9 or 10, wherein the indication information indicates a start location and a size of the resource occupied by the third signal.

12. The method according to claim 11, wherein the indication information comprises a reference point, an offset value, and a resource size, the reference point and the offset value indicate the start location of the resource occupied by the third signal, and the resource size indicates the size of the resource occupied by the third signal.

13. The method according to claim 11, wherein the indication information comprises a precoding resource block group PRG start location, a PRG size, and a quantity of PRGs, the PRG start location indicates the start location of the resource occupied by the third signal, and the PRG size and the quantity of PRGs indicate the size of the resource occupied by the third signal.

14. The method according to claim 9 or 10, wherein the indication information is a bitmap, and first information in the bitmap indicates at least one resource element in the resource occupied by the third signal.

15. The method according to any one of claims 9 to 14, wherein the resource occupied by the third signal and a resource occupied by the second signal totally or partially overlap.

16. The method according to any one of claims 9 to 15, wherein the indication information further indicates at least one of the following information:

> a port number of the third signal, wherein the port number indicates a source of the third signal;
> a sequence of the third signal; and
> scrambling code information of the third signal.

17. A communication method, comprising:

> sending, by a second apparatus, a second signal to a first apparatus;
> sending, by a third apparatus, a third signal to the first apparatus, wherein the third signal causes interference to the second signal; and
> sending, by a fourth apparatus, indication information to the first apparatus, wherein the indication information indicates a resource occupied by the third signal.

18. The method according to claim 17, wherein the fourth apparatus is the same as the second apparatus, and the third apparatus is different from the second apparatus.

19. The method according to claim 17, wherein the fourth apparatus is the same as the third apparatus, and the fourth apparatus is different from the second apparatus.

20. The method according to claim 17, wherein the fourth apparatus, the second apparatus, and the third apparatus are the same.

21. The method according to claim 17, wherein the fourth apparatus, the second apparatus, and the third apparatus are different from each other.

22. The method according to any one of claims 17 to 21, wherein the indication information indicates a start location and a size of the resource occupied by the third signal.

23. The method according to claim 22, wherein the indication information comprises a reference point, an offset value, and a resource size, the reference point and the offset value indicate the start location of the resource occupied by the third signal, and the resource size indicates the size of the resource occupied by the third signal.

24. The method according to claim 22, wherein the indication information comprises a precoding resource block group PRG start location, a PRG size, and a quantity of PRGs, the PRG start location indicates the start location of the resource occupied by the third signal, and the PRG size and the quantity of PRGs indicate the size of the resource occupied by the third signal.

25. The method according to any one of claims 17 to 21, wherein the indication information is a bitmap, and first information in the bitmap indicates at least one resource element in the resource occupied by the third signal.

26. The method according to any one of claims 17 to 25, wherein the resource occupied by the third signal and a resource occupied by the second signal totally or partially overlap.

**27.** The method according to any one of claims 17 to 26, wherein the indication information further indicates at least one of the following information:

> a port number of the third signal, wherein the port number indicates a source of the third signal;
> a sequence of the third signal; and
> scrambling code information of the third signal.

**28.** A communication apparatus, comprising a module configured to perform the method according to any one of claims 1 to 8 or the method according to any one of claims 9 to 16.

**29.** A communication apparatus, comprising a processor coupled to a memory, wherein the processor is configured to invoke a program stored in the memory, to perform the method according to any one of claims 1 to 8 or the method according to any one of claims 9 to 16.

**30.** A communication apparatus, comprising a processor and a memory, wherein the memory is configured to store computer instructions, and when the communication apparatus runs, the processor executes the computer instructions stored in the memory, to perform the method according to any one of claims 1 to 8 or the method according to any one of claims 9 to 16.

**31.** A communication apparatus, comprising a processor and an interface circuit, wherein the processor is configured to: communicate with another apparatus through the interface circuit, and perform the method according to any one of claims 1 to 8 or the method according to any one of claims 9 to 16.

**32.** A computer program product, wherein the computer program product comprises a computer program or instructions, and when the computer program or the instructions are run on a processor, the processor is enabled to perform the method according to any one of claims 1 to 8 or the method according to any one of claims 9 to 16.

**33.** A computer-readable storage medium, wherein the storage medium stores a computer program or instructions, and when the computer program or the instructions are executed by a communication apparatus, the method according to any one of claims 1 to 8 or the method according to any one of claims 9 to 16 is implemented.

FIG. 1(a)

FIG. 1(b)

FIG. 2

FIG. 3

EP 4 742 563 A1

Time-frequency
resource of a sensing
signal

Time-frequency
resource of a data
signal

PRG
0

PRG
1

(a)

PRG
0

PRG
1

(b)

PRG
0

PRG
1

(c)

FIG. 4

Time-frequency resource
of a sensing signal

Time-frequency
resource of a data signal

PRG 0

PRG 1

(a)

PRG 0

PRG 1

(b)

FIG. 5

Network device

Reflecting surface

Data signal of the terminal device 2

Data signal of the terminal device 1

Terminal device 1

Terminal device 2

PRG

PRG

PRG

FIG. 6

Reflecting surface

Network device

Data signal 2

Data signal 1

Second-type terminal device

First-type terminal device

FIG. 7

$R_{uu,c}$

$R_{uu,b}$

$R_{uu,a}$

PRG 0

PRG 1

FIG. 8

| First apparatus | Fourth apparatus | Third apparatus | Second apparatus |

901: Second signal

902: Third signal

903: Indication information

904: Determine the second signal based on the indication information

FIG. 9

FIG. 10(a)

First part of resource, occupying two PRGs, where each PRG includes one RB

Second part of resource, occupying three PRGs, where each PRG includes two RBs

Third part of resource, occupying four PRGs, where each PRG includes two RBs

FIG. 10(b)

PRG 0

First part of resource, occupying two RBs

PRG 1

Second part of resource, occupying three RBs

FIG. 10(c)

DMRS port

Sensing signal or DMRS port

Multiplexing of the sensing signal and the data signal

Data signal

FIG. 11

DMRS port

Sensing signal

Multiplexing of the sensing signal and the data signal

Data signal

FIG. 12

DMRS port

Sensing signal

Multiplexing of the sensing signal and the data signal

Data signal

FIG. 13

Communication apparatus 1400

Processing unit 1410

Transceiver unit 1420

FIG. 14

Communication apparatus 1500

Processor 1510

Interface circuit 1520

Memory 1530

FIG. 15

## INTERNATIONAL SEARCH REPORT

| International application No. |
| --- |
| **PCT/CN2023/110069** |

**A.    CLASSIFICATION OF SUBJECT MATTER**

H04B15/00(2006.01)i;  H04W24/02(2009.01)i

According to International Patent Classification (IPC) or to both national classification and IPC

**B.    FIELDS SEARCHED**

Minimum documentation searched (classification system followed by classification symbols)

IPC:H04B H04W

Documentation searched other than minimum documentation to the extent that such documents are included in the fields searched

Electronic data base consulted during the international search (name of data base and, where practicable, search terms used)

OETXT; CNTXT; WPABSC; ENTXTC; VEN; WPABS; CNKI; 3GPP: 感知信号, 干扰, 指示, 资源, 占用, 重叠, 预编码资源块组, resource?, overlap+, indicat+, interference, occup+, precoding resource block group, PRG, sensing

**C.    DOCUMENTS CONSIDERED TO BE RELEVANT**

| Category* | Citation of document, with indication, where appropriate, of the relevant passages | Relevant to claim No. |
| --- | --- | --- |
| X | CN 115767572 A (HUAWEI TECHNOLOGIES CO., LTD.) 07 March 2023 (2023-03-07) description, paragraphs [0059]-[0068], [0073]-[0076], [0084]-[0116], and [0150] | 1-33 |
| X | WO 2022067678 A1 (HUAWEI TECHNOLOGIES CO., LTD.) 07 April 2022 (2022-04-07) description, page 7, line 30 to page 23, line 12 | 1-33 |
| A | WO 2023011201 A1 (HUAWEI TECHNOLOGIES CO., LTD.) 09 February 2023 (2023-02-09) entire document | 1-33 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **05 December 2023** | **24 January 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/110069**

| Patent document cited in search report | | | Publication date (day/month/year) | Patent family member(s) | | | Publication date (day/month/year) |
|---|---|---|---|---|---|---|---|
| CN | 115767572 | A | 07 March 2023 | WO | 2023030209 | A1 | 09 March 2023 |
| WO | 2022067678 | A1 | 07 April 2022 | EP | 4213428 | A1 | 19 July 2023 |
| | | | | US | 2023239861 | A1 | 27 July 2023 |
| | | | | CN | 116235451 | A | 06 June 2023 |
| WO | 2023011201 | A1 | 09 February 2023 | CN | 115696423 | A | 03 February 2023 |

Form PCT/ISA/210 (patent family annex) (July 2022)